# EUROPÄISCHE PATENTSCHRIFT

(11) **EP 2 750 816 B1**
(45) Veröffentlichungstag und Bekanntmachung des Hinweises auf die Patenterteilung: **18.05.2016**
(21) Anmeldenummer: 12753665.4
(22) Anmeldetag: 31.08.2012
(51) Int. Cl.: B21F 23/00, B21B 39/02, B23P 15/00

(54) **FERTIGUNGSANLAGE ZUR HERSTELLUNG VON PRODUKTEN AUS ZYLINDRISCHEN METALLSTÄBEN**
MANUFACTURING SYSTEM FOR PRODUCING PRODUCTS CONSISTING OF CYLINDRICAL METAL BARS
DISPOSITIF DE PRODUCTION DESTINÉ À FABRIQUER DES PRODUITS À PARTIR DE TIGES MÉTALLIQUES CYLINDRIQUES

(30) Priorität: 01.09.2011 DE 102011112077
(43) Veröffentlichungstag der Anmeldung: 09.07.2014
(73) Patentinhaber: Thyssenkrupp Federn und Stabilisatoren GmbH, 58119 Hagen (DE)
(72) Erfinder: GROSS, Marcel, 44225 Dortmund (DE); KOWATSCH, Wolfgang, 58730 Fröndenberg (DE); KIND, Bertram, 58640 Iserlohn (DE); SCHMIDT, Martin, 45731 Waltrop (DE); GABOR, Heinz-Georg, 58300 Wetter (DE)
(74) Vertreter: Braun-Dullaeus Pannen Patent- und Rechtsanwälte
(86) Internationale Anmeldenummer: PCT/EP2012/003649
(87) Internationale Veröffentlichungsnummer: WO 2013/029792

(56) Entgegenhaltungen:
- DE-B3- 10 315 419
- DE-U1-202006 017 483

## Beschreibung

Die Erfindung betrifft eine Fertigungsanlage zur Herstellung von Produkten aus zylindrischen Metallstäben. Insbesondere betrifft die Erfindung eine Fertigungsanlage zur Herstellung von Schraubenfedern für Radaufhängungen von Kraftfahrzeugen, von Stäben für die Fertigung von Stabilisatoren für Kraftfahrzeuge und von konischen Stäben.

Aus der DE 103 15 419 B3 ist eine Fertigungsanlage zur Herstellung von Produkten aus zylindrischen Metallstäben bekannt, bei der in Durchlaufrichtung der Metallstäbe gesehen nacheinander mehrere Aggregate angeordnet sind, die eine Bearbeitungslinie bilden. So umfasst die bekannte Fertigungsanlage eine Induktions-Staberwärmungseinrichtung zur Erwärmung der Metallstäbe auf eine Temperatur, die oberhalb der Rekristallisationstemperatur des Metalls liegt, aus dem die Metallstäbe bestehen. An die Staberwärmungseinrichtung schließt sich eine Schrägwalzanlage zum Schrägwalzen der erwärmten Metallstäbe an. In Durchlaufrichtung gesehen hinter der Schrägwalzanlage ist eine Transporteinrichtung vorgesehen, mit der die Metallstäbe in Durchlaufrichtung weiter transportiert werden. Die hinter dem Schrägwalzgerüst angeordnete Transporteinrichtung ist in der DE 103 15 419 B3 mit dem Bezugszeichen 8 gekennzeichnet und wird in dieser Druckschrift als "Rollgang" bezeichnet. Unter dem Begriff "Rollgang" versteht der Fachmann mehrere in einer Ebene angeordnete Rollen oder Walzen, deren Rotationsachse senkrecht zur Längsachse des Metallstabes angeordnet ist, der mit dem Rollgang vorwärts transportiert werden soll. Der zu transportierende Metallstab liegt auf den Rollen oder Walzen des Rollgangs auf. Eine oder mehrere dieser Rollen oder Walzen sind dabei angetrieben, um eine Vorwärtsbewegung des Metallstabes zu bewirken.

In der Praxis hat sich gezeigt, dass bei einer Anordnung eines derartigen Transportrollgangs unmittelbar hinter dem Schrägwalzgerüst Oberflächenbeschädigungen der Metallstäbe auftreten können. Solche Oberflächenbeschädigungen sind insbesondere Kratzer und Riefen, die sich im weiteren Verarbeitungsprozess der schräg gewalzten Metallstäbe nicht mehr beseitigen lassen. Derartige Beschädigungen der Metallstäbe führen im fertigen Produkt, z.B. in warm gewickelten Schraubenfedern für Kraftfahrzeug-Radaufhängungen, häufig zu Problemen. Diese Beschädigungen können dazu führen, dass die erforderlichen Belastungen von den Produkten nicht ertragen werden, so dass diese Produkte vorzeitig versagen (z.B. Federbruch). Auch hinsichtlich der Zeitstandfestigkeit der Produkte bringen die genannten Oberflächenbeschädigungen Nachteile mit sich.

Der Erfindung liegt die Aufgabe zugrunde, eine Fertigungsanlage zur Herstellung von Produkten aus zylindrischen Metallstäben anzugeben, bei der eine Beschädigung der Oberfläche der Metallstäbe weitestgehend vermieden wird.

Diese Aufgabe wird durch eine Fertigungsanlage mit den Merkmalen des Patentanspruchs 1 gelöst. Vorteilhafte Weiterführungen sind in den Unteransprüchen angegeben.

Der vorliegenden Erfindung liegt die Erkenntnis zugrunde, dass sich mechanische Oberflächenbeschädigungen an den schräg gewalzten Metallstäben dadurch verhindern lassen, dass die schräg gewalzten Metallstäbe hinter der Schrägwalzanlage durch antreibbare Drehführungen geführt werden. Hierzu ist es erfindungsgemäß vorgesehen, dass in Durchlaufrichtung der Metallstäbe gesehen hinter der Schrägwalzanlage eine Transporteinrichtung zum Weitertransport der Metallstäbe vorgesehen ist, welche mindestens eine antreibbare Drehführung aufweist. Die antreibbare Drehführung ist derart rotatorisch antreibbar, dass die Drehführung mit einer Umlaufgeschwindigkeit rotiert, die an die Umfangsgeschwindigkeit der infolge des Schrägwalzens um ihre Längsachse rotierenden Metallstäbe angepasst ist. Durch diese Maßnahme werden Relativbewegungen zwischen dem schräg gewalzten Metallstab und den Elementen der Transporteinrichtung weitestgehend vermieden, so dass es nicht zu mechanischen Oberflächenbeschädigungen durch Kratzer oder Riefen kommt. Die schräg gewalzten Metallstäbe, die aufgrund der Schrägwalzung um ihre Längsachse rotieren, laufen somit problemlos aus der Schrägwalzanlage heraus und werden durch die Drehführungen geführt, ohne dass es zu Oberflächenbeschädigungen kommt.

Nach einer vorteilhaften Ausführungsform der Erfindung weist die Drehdurchführung einen im Betriebszustand im Wesentlichen mit der Umfangsgeschwindigkeit der Metallstäbe umlaufenden Abschnitt auf. Dieser umlaufende Abschnitt weist vorzugsweise mehrere über den Umfang der Metallstäbe verteilt angeordnete Führungsrollen auf, deren Rotationsachsen im Wesentlichen senkrecht zur Längsachse der Metallstäbe verlaufen. Die Führungsrollen kontaktieren im Betriebszustand die Oberfläche des Metallstabes und werden von dem in Durchlaufrichtung nach vorne transportierten Metallstab mitgeschleppt. Sie rollen dabei auf der Oberfläche des Metallstabes ab.

Die Führungsrollen können in radialer Richtung, das heißt quer zur Längsachse der Metallstäbe gesehen, verstellbar ausgebildet sein. Dies hat den Vorteil, dass Metallstäbe mit unterschiedlichen Durchmessern durch die erfindungsgemäße Drehführung sicher geführt werden können.

Nach einer bevorzugten Ausführungsform der Erfindung sind die Führungsrollen an einem Trägerelement drehbar gelagert, welches rotatorisch mit einer an die Umfangsgeschwindigkeit der um ihre Längsachse rotierenden Metallstäbe angepassten Umlaufgeschwindigkeit antreibbar ist. Durch diese Maßnahme wird erreicht, dass die Führungsrollen sich gleichmäßig mit einer Umlaufgeschwindigkeit drehen, welche an die im Betriebszustand vorliegende Umfangsgeschwindigkeit der Metallstäbe angepasst ist. Die Umfangsgeschwindigkeit der Metallstäbe resultiert aus einer Rotation der Metallstäbe um ihre eigene Längsachse in Folge des Schrägwalzens der Metallstäbe in der Schrägwalzanlage. Die Walzen der Schrägwalzanlage versetzen die Metallstäbe in eine Rotation um ihre Längsachse, und durch die Anordnung der Führungsrollen an einem Trägerelement, welches seinerseits rotatorisch mit einer an die Umfangsgeschwindigkeit der Metallstäbe angepassten Umlaufgeschwindigkeit antreibbar ist, wird erreicht, dass die Führungsrollen sich umlaufend mit einer Geschwindigkeit bewegen, die genau an die an der Oberfläche der Metallstäbe vorliegende Rotationsgeschwindigkeit (Umfangsgeschwindigkeit) angepasst ist. Es kann somit nicht zu Oberflächenschäden verursachenden Relativbewegungen zwischen den Führungsrollen und den um ihre Längsachse rotierenden Metallstäben kommen. Die Antriebsgeschwindigkeit für den rotatorischen Antrieb des Trägerelementes wird abgestimmt auf die Antriebsgeschwindigkeit, mit der die Walzen des Schrägwalzgerüstes angetrieben werden. So kann stets sichergestellt werden, dass der umlaufende Abschnitt der Drehführung mit der richtigen Rotationsgeschwindigkeit rotiert.

Um die aus der Schrägwalzanlage herauslaufenden Metallstäbe dem umlaufenden Abschnitt der Drehführung sicher zuführen zu können weist die Drehführung einen dem umlaufenden Abschnitt vorgelagerten trichterförmigen Einlauf auf. Das führende Ende eines aus der Schrägwalzanlage herauslaufenden Metallstabs vollführt im Betriebszustand keine ideale Bewegung, die lediglich eine Bewegungskomponente in Durchlaufrichtung des Metallstabes aufweist. Sondern das führende Ende des Metallstabes bewegt sich im Betriebszustand auch quer zur Durchlaufrichtung des Metallstabes. Der erfindungsgemäße trichterförmige Einlauf an der Drehführung stellt dabei sicher, dass derartige Bewegungen des führenden Metallstabendes "eingefangen" werden und der Metallstab positionsgerecht dem umlaufenden Abschnitt der Drehführung zugeführt wird.

Es empfiehlt sich, in Durchlaufrichtung gesehen mehrere gleichartige Drehführungen hintereinander anzuordnen.

Stehen die Metallstäbe nicht mehr im Eingriff mit den Walzen der Schrägwalzanlage, so wird die Vorschubbewegung der Metallstäbe in der Transporteinrichtung vorzugsweise durch mindestens ein Treibrollenpaar erzeugt. Die Treibrollen werden vorzugsweise einzeln angetrieben. Die Treibrollen kommen erst dann in Eingriff mit einem zu transportierenden Metallstab, wenn dieser den Walzspalt zwischen den Walzen des Schrägwalzgerüstes verlassen hat. Solange ein Teil des Metallstabs sich noch im Walzspalt des Schrägwalzgerüstes befindet, erhält er seinen Vorschub von den Walzen des Schrägwalzgerüstes. Die Treibrollen sind in radialer Richtung, d.h. quer zur Durchlaufrichtung oder Längsachse der Metallstäbe, verstellbar. Solange sich ein Metallstab im Walzspalt des Schrägwalzgerüstes befindet, sind die Treibrollen auseinander gefahren. Der Metallstab wird dann durch die Walzen nach vorne transportiert. Hat er den Walzspalt verlassen, so kommt er mit einem führenden Abschnitt zwischen den Treibrollen zu liegen. Die Treibrollen werden dann aufeinander zu bewegt, bis sie in Eingriff mit dem Metallstab gelangen. Die Treibrollen sind über Antriebsmotoren vorzugsweise einzeln angetrieben und transportieren den Metallstab weiter in Durchlaufrichtung.

Im Folgenden wird die Erfindung anhand einer Zeichnung näher erläutert. Im Einzelnen zeigen:
- Fig. 1: eine erfindungsgemäße Fertigungsanlage in einer schematischen Draufsicht,
- Fig. 2: den Teil der erfindungsgemäßen Fertigungsanlage gemäß Fig. 1, der in dem mit "X" gekennzeichneten gestrichelten Kasten angeordnet ist,
- Fig. 3: einen Teil der hinter der Schrägwalzanlage angeordneten Transporteinrichtung mit einer erfindungsgemäßen Drehführung und einem Treibrollenpaar.

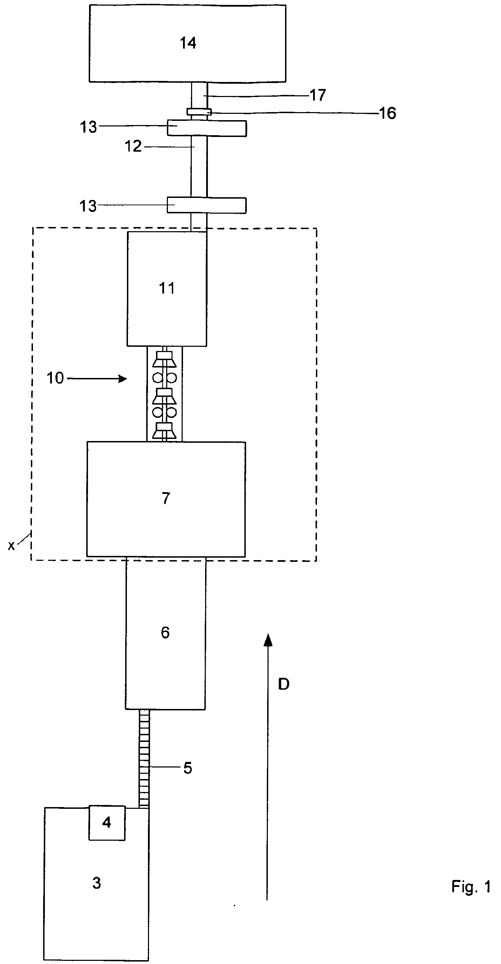

Fig. 1 zeigt in einer schematischen Draufsicht eine erfindungsgemäße Fertigungsanlage zur Herstellung von Produkten aus zylindrischen Metallstäben. Die Erfindung wird vorliegend im Rahmen der Beschreibung eines konkreten Ausführungsbeispiels am Beispiel einer Fertigungsanlage zur Herstellung von warmgewickelten Schraubenfedem beschrieben, wie sie z.B. häufig in Radaufhängungen von Kraftfahrzeugen Verwendung finden. In gleicher Weise kann die erfindungsgemäße Fertigungsanlage aber auch in Anlagen zur Herstellung von Stabilisatoren für Kraftfahrzeuge oder zur Herstellung von konischen Stäben eingesetzt werden.

Die in Fig. 1 dargestellte erfindungsgemäße Fertigungsanlage wird nachfolgend in der Reihenfolge beschrieben, in der die einzelnen Anlagenaggregate in Durchlaufrichtung D der Metallstäbe angeordnet sind. Die Fertigungsanlage umfasst eine Quertransporteinrichtung 3. Auf die Quertransporteinrichtung 3 können bereits auf die richtige Länge zugeschnittene Metallstäbe S aufgegeben werden. Die Metallstäbe S werden auf der Quertransporteinrichtung 3 weiter transportiert zum Rollgang 5. Der Rollgang 5 weist angetriebene Rollen auf, durch die die Metallstäbe der Induktionsstaberwärmungseinrichtung 6 zugeführt werden. In dieser InduktionsStaberwärmungseinrichtung 6 werden die Metallstäbe induktiv auf die für die weitere Bearbeitung erforderliche Bearbeitungstemperatur aufgeheizt. Von der InduktionsStaberwärmungseinrichtung 6 werden die erwärmten Metallstäbe S einer Schrägwalzanlage 7 zugeführt. Die Metallstäbe S werden in der Schrägwalzanlage 7 schräggewalzt. Dabei werden die Metallstäbe S in eine Rotation um ihre Längsachse versetzt.

Die Metallstäbe S laufen aus der Schrägwalzanlage 7 in eine sich daran anschließende Transporteinrichtung 10 hinein. Durch die Transporteinrichtung 10 werden die schräggewalzten und immer noch warmen Metallstäbe S einem Ofen 11 zugeführt. Der Ofen 11 ist im dargestellten Ausführungsbeispiel als Temperaturhalteofen oder Temperaturausgleichsofen ausgebildet, der z.B. elektrisch beheizt werden kann.

An den Ofen 11 schließt sich in Durchlaufrichtung gesehen eine als Auslaufrollgang ausgebildete Transporteinrichtung 12 an. Die Transporteinrichtung 12 weist einen Anschlag 16 für die Metallstäbe auf. Der Anschlag 16 kann vorzugsweise parallel zur Durchlaufrichtung D verschoben werden, um auf einfache Weise unterschiedliche Stablängen abschneiden zu können.

Der Transporteinrichtung 12 sind zwei Warmscheren 13 und zwei Warmstempelanlagen zugeordnet. Mit diesen Warmscheren können die Enden der Metallstäbe S so abgeschnitten werden, dass die beschnittenen Metallstäbe S die gewünschte Soll-Länge für die Herstellung der warm gewickelten Schraubenfedern haben. Gleichzeitig mit dem Schnitt erfolgt eine Warmstempelung.

An die Warmscheren 13 schließt sich ein Wickelbankrollgang 17 an, über den die auf die Soll-Länge zugeschnittenen Metallstäbe S einer herkömmlichen Wickelanlage zum Warmwickeln von Schraubenfedern zugeführt werden.

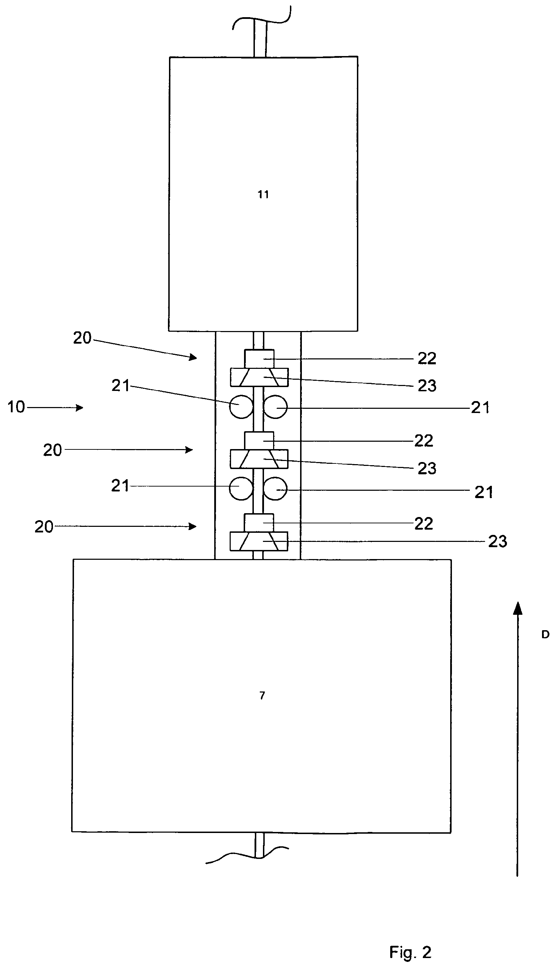

In Fig. 2 ist der Teil der erfindungsgemäßen Fertigungsanlage als Ausschnitt vergrößert dargestellt, der in Fig. 1 in dem mit "X" gekennzeichneten gestrichelten Kasten angeordnet ist.

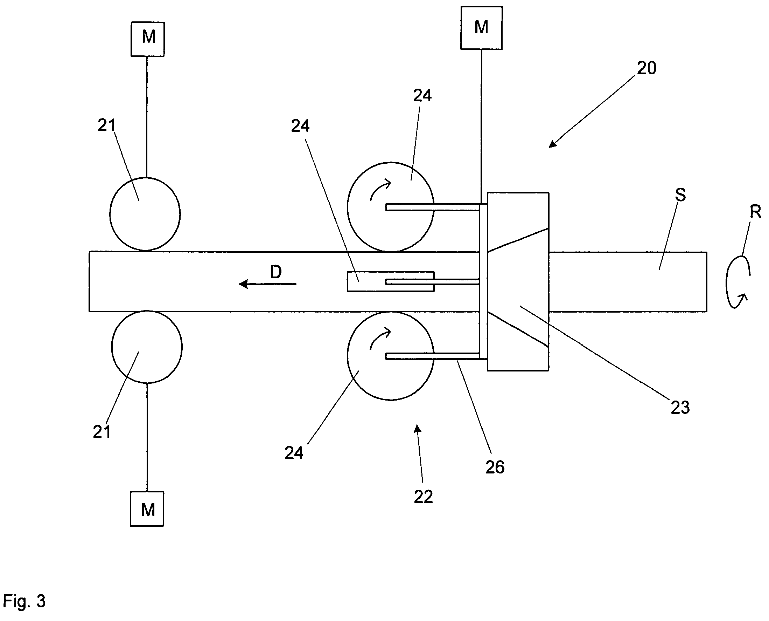

Die vorliegende Erfindung bezieht sich auf die Ausgestaltung der zwischen der Schrägwalzanlage 7 und dem Ofen 11 angeordneten Transporteinrichtung 10. Die erfindungsgemäße Transporteinrichtung 10 umfasst im dargestellten Ausführungsbeispiel drei hintereinander angeordnete Drehführungen 20. Eine erste Drehführung 20 schließt sich unmittelbar an die Schrägwalzanlage 7 an. Zwischen jeweils zwei zueinander benachbarten Drehführungen 20 ist ein aus zwei Treibrollen 21 gebildetes Treibrollenpaar angeordnet. Jede Treibrolle 21 ist mit einem in Fig. 2 nicht dargestellten selbständigen Antrieb versehen (vgl. Fig. 3). Die Treibrollen 21 sind quer zur Durchlaufrichtung D verstellbar. Auf die genaue Betätigung und den Betätigungszeitpunkt der Treibrollen 21 wird weiter unten im Zusammenhang mit der Beschreibung der Fig. 3 eingegangen.

Die Drehführungen 20 weisen einen rotatorisch antreibbaren umlaufenden Abschnitt 22 auf. Der umlaufende Abschnitt 22 wird im Betriebszustand so angetrieben, dass er im Wesentlichen mit einer Umlaufgeschwindigkeit rotiert, die der Umfangsgeschwindigkeit der Metallstäbe S entspricht. Die Umfangsgeschwindigkeit der Metallstäbe ist diejenige Rotationsgeschwindigkeit, die an der Oberfläche der um ihre Längsachse rotierenden Metallstäbe vorliegt.

Da die Rotationsgeschwindigkeit, mit der die Metallstäbe S um ihre Längsachse rotieren, durch die Rotationsgeschwindigkeit der Walzen der Schrägwalzanlage 7 vorgegeben wird, ist es sinnvoll, die Geschwindigkeit, mit der die Antriebe der umlaufenden Abschnitte 22 in Rotation versetzt werden, an die Rotationsgeschwindigkeit der Walzen der Schrägwalzanlage 7 anzupassen.

In Durchlaufrichtung D gesehen ist jedem umlaufenden Abschnitt 22 einer Drehführung 20 ein trichterförmiger Einlauf 23 vorgeschaltet. Der trichterförmige Einlauf 23 dient dazu, sich gegebenenfalls unkontrolliert quer zur Durchlaufrichtung D bewegende führende Enden der Metallstäbe S "einzufangen" und diese kontrolliert dem umlaufenden Abschnitt 22 der Drehführung 20 zuzuführen. Im dargestellten Ausführungsbeispiel sind die trichterförmigen Einläufe 23 mit den umlaufenden Abschnitten 22 drehfest verbunden. Dies bedeutet, dass im dargestellten Ausführungsbeispiel sowohl die umlaufenden Abschnitte 22 als auch die trichterförmigen Einläufe 23 mit einer Rotationsgeschwindigkeit rotieren, die im Wesentlichen der Umfangsgeschwindigkeit der um ihre Längsachse rotierenden Metallstäbe S entspricht.

Um eine bessere Übersichtlichkeit zu erreichen sind in Fig. 2 die Antriebe der Drehführungen 20 und der Treibrollen nicht dargestellt. Hierzu wird auf die Fig. 3 verwiesen.

Es versteht sich, dass es auf die genaue Anzahl der erfindungsgemäßen Drehführungen nicht ankommt. Die Anzahl wird im Wesentlichen von der Dimensionierung der Anlage abhängen. Das gleiche gilt für die Anzahl der Treibrollen.

In Fig. 3 ist schematisch dargestellt, wie eine erfindungsgemäße Drehführung 20 im Detail aufgebaut ist. Der aus der Schrägwalzanlage herauslaufende Metallstab S rotiert um seine Längsachse entsprechend dem Rotationspfeil R. Das führende Stabende des Metallstabes S läuft im Betriebszustand in Durchlaufrichtung D auf den trichterförmigen Einlauf 23 zu und wird von diesem "eingefangen". Dadurch wird das führende Ende des Metallstabes S kontrolliert dem umlaufenden Abschnitt 22 der Drehführung 20 zugeführt. Der umlaufende Abschnitt 22 der Drehführung 20 umfasst ein Trägerelement 26, an welchem im dargestellten Ausführungsbeispiel der Fig. 3 insgesamt vier über dem Umfang des Metallstabes S verteilt angeordnete Führungsrollen 24 drehbar gelagert sind. Das Trägerelement 26 ist über einen Antriebsmotor M rotatorisch antreibbar. Die Geschwindigkeit, mit dem der Antriebsmotor M das Trägerelement 26 antreibt, ist abgestimmt auf die Umfangsgeschwindigkeit, mit der der Metallstab S um seine Längsachse rotiert. In der in Fig. 3 dargestellten Ansicht ist die vierte Führungsrolle 24 durch den Metallstab S verdeckt und somit nicht sichtbar.

Es versteht sich, dass anstelle von vier über den Umfang des Metallstabes S verteilt angeordneten Führungsrollen auch nur drei über den Umfang des Metallstabes S verteilt angeordnete Führungsrollen 24 vorgesehen sein können. Im dargestellten Ausführungsbeispiel mit vier Führungsrollen 24 schließen diese einen Winkel von 90° miteinander ein. In einem anderen, nicht dargestellten Ausführungsbeispiel mit nur drei über den Umfang des Metallstabes S verteilt angeordneten Führungsrollen 24 würden diese vorzugsweise einen Winkel von 120° zwischen sich einschließen.

Im dargestellten Ausführungsbeispiel ist das Trägerelement 26 drehfest mit dem trichterförmigen Einlauf 23 der Drehführung 20 verbunden. Auf diese Weise rotiert auch der trichterförmige Einlauf 23 mit einer Geschwindigkeit, die an die Umfangsgeschwindigkeit des Metallstabes S angepasst ist. Es ist allerdings nicht notwendig, das Trägerelement 26 und den trichterförmigen Einlauf 23 miteinander drehfest zu verbinden. Es ist auch ohne weiteres möglich, den trichterförmigen Einlauf 23 als feststehendes, nicht rotatorisch antreibbares Bauteil auszubilden. In diesem Fall könnte das rotatorisch antreibbare Trägerelement 26 drehbar in dem oder an dem feststehenden trichterförmigen Einlauf 23 gelagert werden.

In Durchlaufrichtung D gesehen hinter der Drehführung 20 ist ein aus Treibrollen 21 bestehendes Treibrollenpaar angeordnet. Jeder Treibrolle 21 ist ein separater Antriebsmotor M zugeordnet. Die Treibrollen 21 stehen im dargestellten Betriebszustand nach Fig. 3 im Eingriff mit der Oberfläche des Metallstabes S und transportieren diesen in Durchlaufrichtung D.

Die Treibrollen 21 sind quer zur Durchlaufrichtung D verstellbar, so dass sie quer zur Durchlaufrichtung D voneinander weg und aufeinander zu bewegt werden können. Befindet sich der Metallstab S noch im Walzspalt, d.h. also zwischen den Walzen der Schrägwalzanlage 7, so sind die Treibrollen 21 so weit voneinander beabstandet, dass der um seine Längsachse rotierende Metallstab S zwischen die beiden Treibrollen 21 einfahren kann, ohne diese zu berühren. Erst wenn der Metallstab S den Walzspalt der Schrägwalzanlage 7 verlassen hat und somit aufgrund des nicht mehr vorhandenen Eingriffs mit den Walzen der Schrägwalzanlage 7 nicht mehr um seine Längsachse rotiert und keinen Vorschub mehr hat, kommt der Metallstab S zwischen den Treibrollen 21 zu liegen. Dies wird von der Fertigungsanlage z.B. über einen Sensor detektiert. Anschließend werden die Treibrollen 21 soweit aufeinander zubewegt, bis sie in Eingriff mit der Oberfläche des Metallstabes S gelangen. Dann werden die Treibrollen 21 über die Antriebsmotoren M in Rotation versetzt, so dass sie den Metallstab S weiter in Durchlaufrichtung D transportieren.

Durch die vorstehend beschriebene Anordnung von Drehführung mit umlaufendem Abschnitt 22 und trichterförmigem Einlauf 23 sowie den Treibrollen 21 ist sichergestellt, dass keine störenden Relativbewegungen zwischen dem um seine Längsachse rotierenden Metallstab S und den Elementen der Drehführung 22 sowie den Treibrollen 21 auftreten. Unerwünschte und die Produktqualität herabsetzende Oberflächenbeschädigungen des Metallstabes S werden auf diese Weise weitgehend vermieden, so dass mit der erfindungsgemäßen Fertigungsanlage qualitativ hochwertige Produkte hergestellt werden können.

## Patentansprüche

1. Fertigungsanlage zur Herstellung von Produkten aus zylindrischen Metallstäben (S), mit in Durchlaufrichtung der Metallstäbe gesehen nacheinander angeordneten, eine Bearbeitungslinie bildenden Aggregaten, umfassend eine Induktions-Staberwärmungseinrichtung (6) zur Erwärmung der Metallstäbe (S), eine Schrägwalzanlage (7) zum Schrägwalzen der erwärmten Metallstäbe (S), und eine sich an die Schrägwalzanlage (7) anschließende Transporteinrichtung (10) zum Weitertransport der Metallstäbe (S), **dadurch gekennzeichnet, dass** die Transporteinrichtung (10) mindestens eine antreibbare Drehführung (20) aufweist, welche derart rotatorisch antreibbar ist, dass die Drehführung (20) mit einer Umlaufgeschwindigkeit rotiert, die an eine Umfangsgeschwindigkeit der infolge des Schrägwalzens um ihre Längsachse rotierenden Metallstäbe (S) angepasst ist.

2. Fertigungsanlage nach Anspruch 1, **dadurch gekennzeichnet, dass** die Drehführung (20) einen im Betriebszustand im Wesentlichen mit der Umfangsgeschwindigkeit der Metallstäbe (S) umlaufenden Abschnitt (22) aufweist.

3. Fertigungsanlage nach Anspruch 2, **dadurch gekennzeichnet, dass** der umlaufende Abschnitt (22) mehrere über den Umfang der Metallstäbe (S) verteilt angeordnete Führungsrollen (24) aufweist, deren Rotationsachsen (25) im Wesentlichen senkrecht zur Längsachse der Metallstäbe verlaufen.

4. Fertigungsanlage nach Anspruch 3, **dadurch gekennzeichnet, dass** die Führungsrollen (24) in radialer Richtung, d.h. quer zur Längsachse der Metalistäbe (S), verstellbar sind.

5. Fertigungsanlage nach Anspruch 3 oder 4, **dadurch gekennzeichnet, dass** die Führungsrollen (24) an einem Trägerelement (26) drehbar gelagert sind, welches rotatorisch mit einer an die Umfangsgeschwindigkeit der um ihre Längsachse rotierenden Metallstäbe (S) angepassten Umlaufgeschwindigkeit antreibbar ist.

6. Fertigungsanlage nach einem der Ansprüche 2 bis 5, **dadurch gekennzeichnet, dass** die Drehführung (20) einen dem umlaufenden Abschnitt (22) vorgelagerten, trichterförmigen Einlauf (23) für die Zuführung der Metallstäbe (S) zu dem umlaufenden Abschnitt (22) aufweist.

7. Fertigungsanlage nach einem der voranstehenden Ansprüche, **dadurch gekennzeichnet, dass** in Durchlaufrichtung gesehen mehrere hintereinander angeordnete Drehführungen (20) vorgesehen sind.

8. Fertigungsanlage nach einem der voranstehenden Ansprüche, **dadurch gekennzeichnet, dass** die Transporteinrichtung (10) mindestens ein Treibrollenpaar (21) umfasst, durch welches die Metallstäbe (S) im Betriebzustand in Durchlaufrichtung vorwärts transportiert werden können.

## Claims

1. A production facility for making products from cylindrical metal rods (S), with units arranged one after the other, seen in the throughput direction of the metal rods, forming a machining line, comprising an induction rod-heating device (6) for heating up the metal rods (S), a cross rolling unit (7) for cross rolling the heated metal rods (S), and a transport unit (10) adjoining to the cross rolling unit (7) for onward transportation of the metal rods (S), **characterised in that** the transport unit (10) has at least one drivable rotary guide (20), which can be rotationally driven in such a way that the rotary guide (20) rotates at a rotational speed which is adapted to a circumferential speed at which the metal rods (S) rotate about their longitudinal axes as a result of the cross rolling.

2. The production facility according to claim 1, **characterised in that** the rotary guide (20) comprises a section (22) which, when in operation, is rotating at essentially the circumferential speed of the metal rods (S).

3. The production facility according to claim 2, **characterised in that** the rotating section (22) comprises a number of guide rollers (24) arranged so that they are distributed around the circumference of the metal rods (S), and whose rotational axes (25) extend essentially at right angles to the longitudinal axes of the metal rods.

4. The production facility according to claim 3, **characterised in that** the guide rollers (24) are adjustable in radial direction, that is transversely to the longitudinal axes of the metal rods (S).

5. The production facility according to claim 3 or 4, **characterised in that** the guide rollers (24) are rotatably mounted on a support element (26), which can be rotationally driven at a rotational speed adapted to the circumferential speed of the metal rods (S) rotating about their longitudinal axes.

6. The production facility according to one of claims 2 to 5, **characterised in that** the rotary guide (20) comprises a funnel-shaped intake (23) upstream of the rotating section (22) for feeding the metal rods (S) into the rotating section (22).

7. The production facility according to one of the preceding claims, **characterised in that**, seen in the throughput direction, a number of rotary guides (20) are provided one behind the other.

8. The production facility according to one of the preceding claims, **characterised in that** the transport unit (10) comprises at least one pair of driving rollers (21), which during operation allow the metal rods (S) to be transported forwards in throughput direction.

## Revendications

1. Installation de production pour la fabrication de produits à partir de tiges métalliques cylindriques (S), avec des agrégats disposés les uns après les autres lorsque vus en direction de passage en machine et formant une ligne d'usinage, comprenant un dispositif d'échauffement par induction de tiges (6) pour l'échauffement des tiges métalliques (S), une installation à cylindres obliques (7) pour le dressage et lissage sur cylindres obliques des tiges métalliques échauffées (S), et un dispositif de transport (10) en jonction avec l'installation à cylindres obliques (7) pour transporter plus loin les tiges métalliques (S), **caractérisée en ce que** le dispositif de transport (10) présente au moins un guide rotatif (20) pouvant être entraîné, lequel peut être entraîné en rotation d'une manière telle, que le guide rotatif (20) tourne avec une vitesse de rotation qui est adaptée à une vitesse périphérique des tiges métalliques (S) en rotation autour de leur axe longitudinal suite au dressage et lissage sur cylindres obliques.

2. Installation de production selon la revendication 1, **caractérisée en ce que** le guide rotatif (20) présente, en mode de fonctionnement, une partie (22) sensiblement rotative à la vitesse périphérique des tiges métalliques (S).

3. Installation de production selon la revendication 2, **caractérisée en ce que** la partie rotative (22) présente plusieurs galets de guidage (24) disposés de manière répartie sur le pourtour des tiges métalliques (S), dont les axes de rotation (25) s'étendent sensiblement perpendiculairement à l'axe longitudinal des tiges métalliques.

4. Installation de production selon la revendication 3, **caractérisée en ce que** les galets de guidage (24) sont réglables en direction radiale, c'est-à-dire transversalement à l'axe longitudinal des tiges métalliques (S).

5. Installation de production selon la revendication 3 ou 4, **caractérisée en ce que** les galets de guidage (24) sont montés de manière rotative sur un élément de support (26), lequel peut être entraîné de manière rotative à une vitesse de rotation adaptée à la vitesse périphérique des tiges métalliques (S) tournant autour de leur axe longitudinal.

6. Installation de production selon l'une des revendications 2 à 5, **caractérisée en ce que** le guide rotatif (20) présente une entrée (23) en forme d'entonnoir disposée en amont de la partie rotative (22) pour l'amenée des tiges métalliques (S) vers la partie rotative (22).

7. Installation de production selon l'une des revendications précédentes, **caractérisée en ce que** l'on prévoit plusieurs guides rotatifs (20) disposés les uns derrière les autres lorsque vus en direction de passage en machine.

8. Installation de production selon l'une des revendications précédentes, **caractérisée en ce que** le dispositif de transport (10) comprend au moins une paire de galets d'entraînement (21) grâce à laquelle il est possible, en mode de fonctionnement, de transporter les tiges métalliques (S) vers l'avant dans la direction de passage en machine.
